# EUROPÄISCHE PATENTSCHRIFT

(11) **EP 3 727 965 B1**
(45) Veröffentlichungstag und Bekanntmachung des Hinweises auf die Patenterteilung: **01.03.2023**
(21) Anmeldenummer: 18840025.3
(22) Anmeldetag: 14.12.2018
(51) Int. Cl.: B60T 8/17, B60T 8/1755

(54) **VERFAHREN ZUR STABILISIERUNG EINER FAHRZEUGKOMBINATION**
METHOD FOR STABILIZING A VEHICLE COMBINATION
PROCÉDÉ DE STABILISATION D'UN TRAIN ROUTIER

(30) Priorität: 20.12.2017 DE 102017011802
(43) Veröffentlichungstag der Anmeldung: 28.10.2020
(73) Patentinhaber: ZF CV Systems Europe BV, 1170 Brussels (BE)
(72) Erfinder: HEISE, Michael, 30449 Hannover (DE); MUNKO, Tobias, 30449 Hannover (DE); SCHUBERT, Jan, 30900 Wedemark (DE); BECKER, Dieter, 76479 Steibmauern (DE); SIENITZKI, Arwed, 70329 Stuttgart (DE)
(74) Vertreter: Rassler, Andrea
(86) Internationale Anmeldenummer: PCT/EP2018/000561
(87) Internationale Veröffentlichungsnummer: WO 2019/120604

(56) Entgegenhaltungen:
- EP-A1- 2 269 880
- EP-A1- 2 384 941
- EP-A2- 3 216 333
- WO-A1-2004/109326
- WO-A1-2007/008150
- DE-A1- 19 859 953
- DE-A1-102007 023 345
- DE-A1-102012 000 783
- DE-A1-102014 100 069

## Beschreibung

Die Erfindung betrifft ein Verfahren zur Stabilisierung einer Fahrzeugkombination, nach dem Oberbegriff des Patentanspruchs 1.

Es ist bekannt, eine Fahrzeugkombination, bestehend aus einem Zugfahrzeug und einem Anhänger, durch Einwirkung eine Motorbremse oder eines Retarders auf das Zugfahrzeug abzubremsen. Der Anhänger kann dabei auf das Zugfahrzeug auffahren. Zusätzlich entsteht durch eine Reduktion einer Seitenführung an der Antriebsachse infolge der Motor- oder Retarderbremsung die Gefahr, dass sich ein Knickwinkel zwischen Zugfahrzeug und Anhänger einstellt, welcher die Entstehung einer Klappmessersituation zwischen Zugfahrzeug und Anhänger begünstigt. Um dies zu verhindern, ist es bekannt, mechanische Streckbremsen einzusetzen, um die Fahrzeugkombination zu stabilisieren. Solche Streckbremsen führen aber zu einer Überhitzung und/oder starken Abnutzung der Anhängerbremsen.

Aus der EP 2 199 166 A1 sind ein Bremssteuersystem für Anhänger sowie eine Methode zur Kalibrierung des Bremssteuersystems bekannt. Dabei wird ein Verhältnis zwischen einer Bremskraft des Zugfahrzeuges und einer Verzögerung des Zugfahrzeuges für die nicht ziehende Situation und für die ziehende Situation der Fahrzeugkombination gebildet und abgespeichert. Eine Radbremse des Anhängers wird dabei in Abhängigkeit von einem Vergleich der beiden Verhältnisse aktiviert.

Die DE 10 2014 011 500 A1 offenbart ein Verfahren zur Stabilisierung einer Fahrzeugkombination, bei welcher die Fahrzeugkombination ein Zugfahrzeug und mindestens ein Anhängerfahrzeug aufweist, wobei zur Stabilisierung der Fahrzeugkombination Raddrehzahlen zumindest einer angetriebenen Achse des Zugfahrzeuges und eine Fahrzeuggeschwindigkeit des Zugfahrzeuges ermittelt werden. Anschließend wird mindestens in einem ersten Kriterium überprüft, ob an der angetriebenen Achse des Zugfahrzeuges ein bremsender Radschlupf ohne Betätigung einer Radbremse der angetriebenen Achse vorliegt. Bei Erfüllung des ersten Kriteriums erfolgt die Ansteuerung der Radbremsen des Anhängerfahrzeuges.

Die DE 10 2014 100 069 A1 zeigt ein Verfahren zum Steuern einer Bremseinrichtung einer Zugfahrzeug-Anhängerkombination durch eine elektronische Steuergeräte-Einrichtung, welche in einem Fahrzustand bei unbetätigter Betriebsbremse den auf das Zugfahrzeug aufschiebenden Anhänger erkennt und bei Erreichen oder Überschreitung einer vorbestimmten Schubwirkung des Anhängers eine Bremsanlage des Anhängers bei weiter unbetätigter Betriebsbremse des Zugfahrzeuges automatisch zur Erzeugung einer Bremskraft betätigt. Als Kenngröße für die Erkennung des Aufschiebens des Anhängers wird ein von einer Antriebsmaschine des Zugfahrzeuges erzeugtes Antriebsmoment und/oder ein die Zugfahrzeuglängsverzögerung represäntierendes Signal und/oder ein die Anhängerlängsverzögerung repräsentierendes Signal herangezogen. Die Erkennung des Aufschiebens des Anhängers erfolgt bei Überschreitung eines der Kenngröße zugeordneten Grenzwertes.

In der DE 198 59 963 A1 ist ein Verfahren zur Stabilisierung eines aus einem Zugfahrzeug und einem Anhänger bzw. Auflieger bestehenden Fahrzeuggespanns offenbart, bei welchem eine Knickwinkelgröße ermittelt wird. Die Knickwinkelgröße wird mit einer Vergleichsgröße verglichen, die in Abhängigkeit einer die Geschwindigkeit des Zugfahrzeuges repräsentierenden Geschwindigkeitsgröße und/oder abhängig davon, ob für das Zugfahrzeug Stabilisierungseingriffe durchgeführt werden, variiert.

Aus der EP 2 384 941 A1 ist ein Verfahren zum Bremsen eines fremdkraftgebremsten Gerätes bekannt, das an ein motorgetriebenes Nutzfahrzeug angehängt ist, bei welchem ein Schleppmoment oder ein Parameter des Motors ermittelt wird, der angibt, dass das Gerät auf das Nutzfahrzeug aufschiebt. Ein Bremssignal für den Anhänger wird bei Überschreiten eines vorbestimmten Schleppmoment-Grenzwertes eingeleitet.

Die DE 10 2007 023 345 A1 offenbart ein Verfahren zum Betreiben einer Bremsanlage für ein mit einem Anhänger pneumatisch koppelbares Nutzfahrzeug. Die Überprüfung, ob eine Streckbremsfunktionalität benötigt wird, hängt von Signalen ab, die von dem Fahrzustand des Fahrzeuges abhängen oder beispielsweise durch Vergleiche mit Schwellwerten aus diesen abgeleitet werden.

Die WO 2007/008150 A1 zeigt ein System zur Stabilisierung einer Fahrzeugkombination, die ein ziehendes Fahrzeug und ein gezogenes Fahrzeug umfasst. Um festzustellen, ob ein kritischer Fahrzustand vorhanden ist, werden Umgebungszustände, wie Straßenneigung und Umgebungstemperatur erfasst und mit vorbestimmten Vergleichswerten verglichen. Wird ein kritischer Fahrzustand erkannt, gibt das Hängerbremssystem Bremsimpulse ab, deren Bremskrafthöhe stark genug ist, um die Fahrzeugkombination zu stabilisieren, jedoch nicht stark genug sind, um Abnutzungs-, Fading- oder Verglasungsprobleme der Anhängerbremse zu verursachen.

In der WO 2004/109326 A1 ist eine Vorrichtung zur Ermittlung einer räumlichen Ausrichtung eines mit einem Zugfahrzeug verbundenen Aufliegers oder Anhängers bekannt, welche mittels Bilderfassungssensoren die Konturen des Aufliegers oder Anhängers erfasst, um einen Knickwinkel zwischen Anhänger/Auflieger und Zugfahrzeug zu erkennen, der eine kritische Fahrsituation hervorrufen könnte. Zur Einstellung von Gegenmaßnahmen werden die Bremsmittel beeinflusst.

Aus der DE 10 2012 00 783 A1 ist ein Verfahren zur Stabilisierung eines Fahrzeuggespanns bei einem Brems- oder Ausweichmanöver bekannt. Bei einem kritischen Fahrzustand erfolgt zur Stabilisierung des Fahrzeuggespanns ein automatisierter Bremseingriff auf die Radbremsen des Anhängers, bei welchem die Stärke des Bremseingriffs geregelt wird.

Solche automatischen Ansteuerungen des Anhängers führen infolge einer Motorbremsung oder einer Retarderbremsung des Zugfahrzeuges, insbesondere bei einer Bergabfahrt der Fahrzeugkombination, dazu, dass die Radbremse des Anhängers zu häufig aktiviert wird. Die Verwendung von häufigen, sich wiederholenden Bremsimpulsen erniedrigt zwar das Risiko der Überhitzung der Radbremse, ermöglicht aber nur einen geringen Stabilisierungseffekt der Fahrzeugkombination.

Der Erfindung liegt die Aufgabe zugrunde, ein Verfahren zur Stabilisierung einer Fahrzeugkombination anzugeben, bei welchem zuverlässig eine Stabilisierung der Fahrzeugkombination eingestellt wird.

Erfindungsgemäß ist die Aufgabe durch ein Verfahren zur Stabilisierung einer Fahrzeugkombination, gemäß dem Patentanspruch 1 gelöst. Dies hat den Vorteil, dass die Bremsung des Anhängers immer automatisch ausgelöst wird, wenn Fahrzeugkonditionen detektiert werden, welche zu einer Klappmessersituation zwischen Zugfahrzeug und Anhänger führen können. Dadurch wird eine zuverlässige Stabilisierung der Fahrzeugkombination in jeder Fahrsituation möglich. Je mehr Gefälle die Fahrbahn, auf welcher sich die Fahrzeugkombination bewegt, aufweist bzw. je kleiner der ermittelte Kurvenradius ist, umso länger muss der Bremsdruck auf die Räder des Anhängers einwirken, um eine Stabilisierung der Fahrzeugkombination zu gewährleisten.

Vorteilhafterweise wird der Bremsdruck kontinuierlich auf die Räder des Anhängers aufgebracht. Somit wird die Klappmessersituation zwischen Zugfahrzeug und Anhänger zuverlässig vermieden. Die kontinuierliche Anwendung des Bremsdruckes erlaubt einen weichen und effizienten Eingriff, ohne dass der Fahrer der Fahrzeugkombination dadurch gestört wird.

In einer Ausgestaltung wird die Verzögerung des Zugfahrzeuges aus einem Motorbremsmoment oder einem Retarderbremsmoment bestimmt. Diese Situation ist immer dann gegeben, wenn der Fahrer kein Bremspedal aktiv betätigt. Einer Überhitzung der Radbremse des Anhängers und einem Missbrauch der Steuerung der Radbremse des Anhängers wird dabei zuverlässig vorgebeugt.

Um die Sicherheit des Fahrzeuges zu gewährleisten, wird der Anhänger abgebremst, wenn sich die Fahrzeugkombination auf einer ebenen oder abschüssigen Fahrbahn bewegt. In solchen Fahrsituationen besteht ein hohes Risiko eines Ausbrechens des Anhängers bzw. eines Aufschiebens des Anhängers auf das Zugfahrzeug.

In einer Weiterbildung wird der Knickwinkel aus einem Kurvenradius bestimmt, wobei der Kurvenradius aus einem Gierwinkel abgeleitet wird, welcher mittels eines Gierratensensors detektiert wird oder anhand der Geschwindigkeit der Vorderräder des Zugfahrzeuges bestimmt wird. Insbesondere bei Fahrzeugen, die über ein ECS- oder ESP-System verfügen, kann der an sich vorhandene Gierratensensor verwendet werden, um den Knickwinkel zwischen Zugfahrzeug und Anhänger zu bestimmen, was eine besonders kostengünstige Variante darstellt.

In einer Ausführungsform erfolgt ein Aufbringen des Bremsdrucks auf die Räder des Anhängers nach einer manuellen Funktionseinstellung im Fahrzeug. Das hat den Vorteil, dass eine elektrisch eingeleitete Bremsung des Anhängers durch das Zugfahrzeug nur ausgelöst werden kann, wenn dies vom Fahrer erlaubt wurde und dies durch eine Schaltereinstellung angezeigt ist.

In einer Alternative erfolgt ein Aufbringen des Bremsdruckes auf die Räder des Anhängers nach Herunterschalten eines Ganges oder nach Erhöhung eines Retarderbremsmomentes. Dadurch ist eine automatische Aktivierung der Anhängerbremsung möglich, ohne dass diese vom Fahrer weiter beeinflusst wird.

In einer weiteren Variante wird eine Stärke des Bremsdrucks in Abhängigkeit eines aktuellen Retarderbremsmomentes und/oder eines aktuellen Motorbremsmomentes bestimmt. Durch diese Relation können Rückschlüsse auf eine eventuelle Destabilisierung zwischen Zugfahrzeug und Anhänger gezogen werden, wobei eine solche Stärke des Bremsdrucks gewählt wird, welche einer Destabilisierung der Fahrzeugkombination zuverlässig entgegenwirkt.

In einer Weiterbildung wird die Stärke des Bremsdrucks in Abhängigkeit eines Gefälles der Fahrbahn und/oder einer Gewichtsverteilung einer Ladung in der Fahrzeugkombination bestimmt. Dabei wird insbesondere die Gewichtsverteilung der Ladung in der Fahrzeugkombination berücksichtigt, welche ein Ausbrechen des Anhängers bei schwerer Beladung leicht möglich macht, so dass ein erhöhter Bremsdruck notwendig ist, um die Stabilisierung der Fahrzeugkombination aufrechtzuerhalten.

In einer weiteren Ausführungsform wird die Stärke des Bremsdrucks so gewählt, dass eine haptische Rückmeldung über die Verzögerung des Anhängers im Zugfahrzeug wahrgenommen wird. Der Fahrer fühlt bei dem eingestellten Bremsdruckniveau zur Abbremsung des Anhängers, dass dieser abgebremst wird und erhält somit eine Rückmeldung über die automatisch eingeleitete Abbremsung des Anhängers.

Vorteilhafterweise wird das Abbremsen des Anhängers durch eine Betätigung eines Gaspedals beendet. Somit hat der Fahrer immer die Oberhoheit über das Stabilisierungsverfahren und kann es bei Bedarf nach eigener Abschätzung durch Betätigung des Gaspedals beenden.

Die Erfindung lässt zahlreiche Ausführungsformen zu. Eine davon soll anhand der in der Zeichnung dargestellten Figur näher erläutert werden.

Es zeigt:
- Fig. 1: eine Fahrzeugkombination zur Durchführung des erfindungsgemäßen Verfahrens,
- Fig. 2: ein erstes Ausführungsbeispiel des erfindungsgemäßen Verfahrens,
- Fig. 3: ein zweites Ausführungsbeispiel des erfindungsgemäßen Verfahrens.

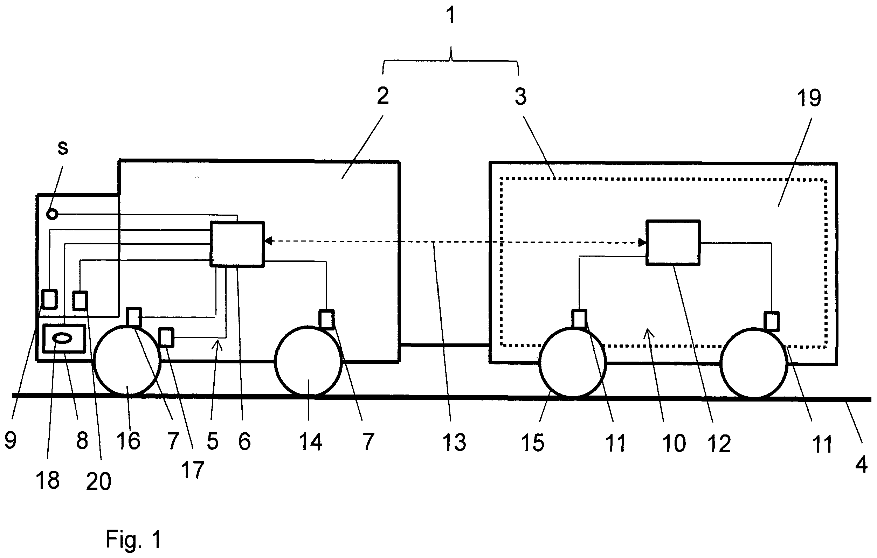

In Fig. 1 ist eine Fahrzeugkombination 1 dargestellt, welche aus einem Zugfahrzeug 2 und einem Anhänger 3 gebildet ist. Diese Fahrzeugkombination 1 fährt auf einer ebenen oder abschüssigen Fahrbahn 4. Das Zugfahrzeug 2 weist ein Bremssystem 5 mit einer Brems-Steuereinrichtung 6 auf, wobei die Brems-Steuereinrichtung 6 die Radbremsen 7 des Zugfahrzeuges 2 ansteuert. Weiterhin weist das Zugfahrzeug 2 eine Motor-Getriebe-Einheit 8 auf. Darüber hinaus ist ein Retarder 9 vorgesehen, der von der Brems-Steuereinrichtung 6 direkt oder indirekt angesteuert wird. Die Brems-Steuereinrichtung 6 kann dabei den Retarder 9 über Motorbremssteuersignale ansteuern. Weiterhin kann die Brems-Steuereinrichtung 6 Zustandssignale der Motor-Getriebe-Einheit 8 von deren Motorsteuergerät aufnehmen. Die Motor-Getriebe-Einheit 8 umfasst eine Gangschalteinheit 18 zur Einstellung unterschiedlicher Gänge G_{G}.

Der Anhänger 3 weist ein eigenes Anhängerbremssystem 10 mit Anhängerradbremsen 11 auf. Das Anhängerbremssystem 10 wird von einer eigenen Anhängerbremssteuereinrichtung 12 betätigt, welche über ein Bussystem 13 mit der Brems-Steuereinrichtung 6 des Zugfahrzeuges 2 verbunden ist.

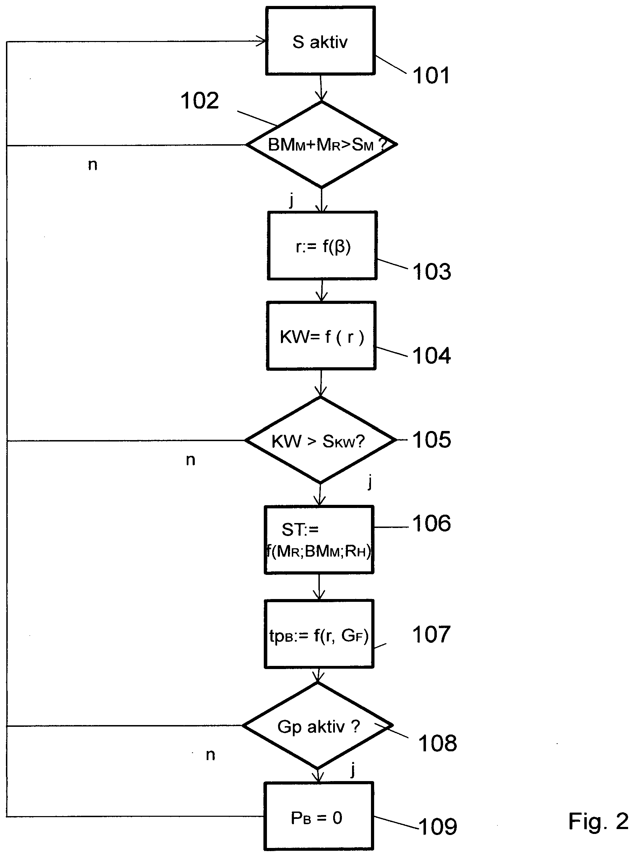

Im Zusammenhang mit Fig. 2 soll ein Ausführungsbeispiel des erfindungsgemäßen Verfahrens erläutert werden, welches durch die Brems-Steuereinrichtung 6 ausgeführt wird. Dieses Verfahren kann nur dann ausgeführt werden, wenn dies vom Fahrer auch wirklich gewünscht wird. Deshalb wird im Block 101 ein Schalter S zur Aktivierung des Verfahrens betätigt Im Block 102 wird eine Summe aus einem Motorbremsmoment BM_{M} und einem Retarderbremsmoment M_{R} mit einem Summenschwellwert S_{M} verglichen. Übersteigt der Summenschwellwert S_{M} diese Summe, wird zum Block 103 weiter gegangen.

Im Block 103 wird ein Kurvenradius r bestimmt, aus welchem im Block 104 ein Knickwinkel KW zwischen Zugfahrzeug 2 und Anhänger 3 ermittelt wird. Der Kurvenradius r ist dabei der Radius der vom Zugfahrzeug 2 befahrenen Kurve. Im Block 105 wird dieser ermittelte Knickwinkel KW mit einem Knickwinkelschwellwert S_{KW} verglichen. Übersteigt der Knickwinkel KW den Knickwinkelschwellwert S_{KW}, so wird davon ausgegangen, dass instabile Verhältnisse an der Fahrzeugkombination 1 auftreten können und eine Klappmessersituation zwischen Zugfahrzeug 2 und Anhänger 3 möglich wird. Deshalb wird im Block 106 eine Stärke ST eines an die Räder 15 des Anhängers 3 anzulegenden Bremsdrucks p_{B} aus dem Motorbremsmoment BM_{M} und dem Retarderbremsmoment M_{R} ermittelt. Gleichzeitig wird die Stärke ST des Bremsdruckes p_{B} so gewählt, dass der Fahrer in dem Zugfahrzeug 2 eine haptische Rückmeldung R_{H} darüber empfindet, ob der Anhänger 3 abgebremst wird oder nicht.

Die Dauer tp_{B} des Anliegens des Bremsdruckes tp_{B} an den Rädern 15 des Anhängers 3 wird im Block 107 in Abhängigkeit des Kurvenradius r und eines Gefälles G_{F} der Fahrbahn 4 bestimmt. Je größer das Gefälle G_{F} ist, umso länger wird der Bremsdruck p_{B} kontinuierlich an die Räder 15 des Anhängers 3 angelegt. Gleichzeitig ist die Dauer tp_{B} des Anlegens des Bremsdrucks p_{B} aber auch von dem ermittelten Kurvenradius r abhängig, wobei der Bremsdruck p_{B} umso länger anliegt, je kleiner der ermittelte Kurvenradius r ist.

Im Block 108 wird abgefragt, ob der Fahrer das Gaspedal G_{P} betätigt hat. Ist dies der Fall, so wird zum Block 109 gegangen, wo die Abbremsung des Anhängers 3 beendet wird. Anschließend wird zum Block 101 zurückgegangen, wo aufs Neue überprüft wird, ob stabilitätsgefährdende Bedingungen an der Fahrzeugkombination 1 vorhanden sind.

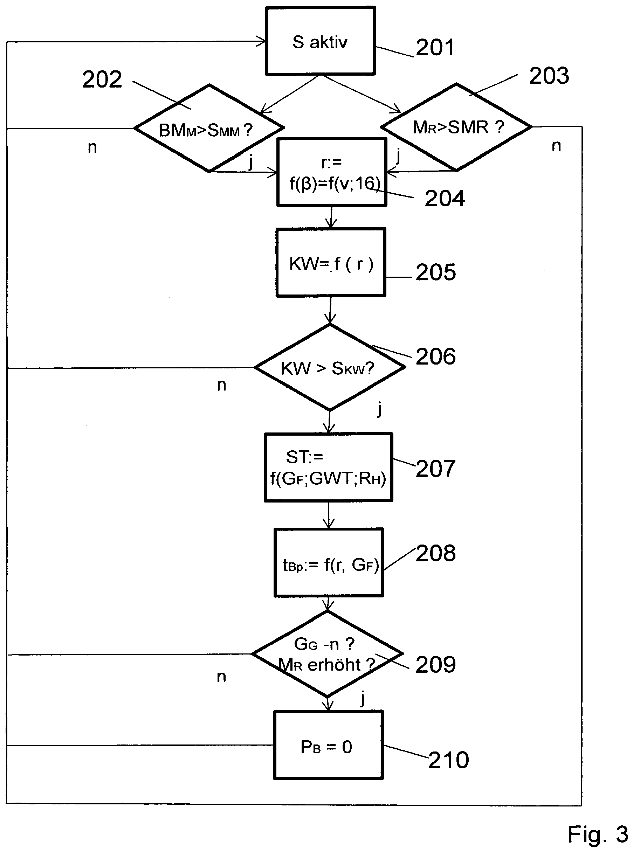

Ein zweites Ausführungsbeispiel des erfindungsgemäßen Verfahrens ist in Fig. 3 dargestellt. Auch hier wird in Block 201 ein Schalter S zur Aktivierung des Verfahrens durch den Fahrer betätigt. Im Block 202 wird ein Motorbremsmoment BM_{M} mit einem Motormomentenschwellwert SB_{M} verglichen. Ist dieses Motorbremsmoment BM_{M} größer als der Motormomentenschwellwert SB_{M}, wird zum Block 204 weitergegangen. Parallel dazu wird im Block 203 eine Retarderbremsmoment M_{R} mit einem Retardermomentenschwellwert M_{R} verglichen. Übersteigt das Retarderbremsmoment M_{R} den Retardermomentenschwellwert M_{R}, wird ebenfalls zum Block 204 weiter gegangen.

Im Block 204 wird der Kurvenradius r aus einem Gierwinkel β ermittelt, welcher aus einer Geschwindigkeit v der Vorderräder 16 des Zugfahrzeuges 2 bestimmt wird. Die Geschwindigkeit v der Vorderräder 16 des Zugfahrzeuges 2 wird aus den Raddrehzahlen der Vorderräder 16 des Zugfahrzeuges ermittelt, welche mit je einem Raddrehzahlsensor 17 bestimmt werden.

Aus dem Kurvenradius r wird, wie bereits erläutert, ein Knickwinkel KW zwischen Zugfahrzeug 2 und Anhänger 3 bestimmt (Block 205). Im Block 206 wird der so ermittelte Knickwinkel KW mit dem Knickwinkelschwellwert S_{KW} verglichen. Übersteigt der Knickwinkel KW den Knickwinkelschwellwert S_{KW}, so werden die Räder 15 des Anhängers 3 mit einem Bremsdruck p_{B} beaufschlagt.

Die Stärke ST des Bremsdruckes p_{B} wird in Block 207 in Abhängigkeit des Gefälles G_{F} der Fahrbahn 4 und einer Gewichtsverteilung GWT einer Ladung 19 in der Fahrzeugkombination 1 bestimmt. Gleichzeitig wird die Stärke ST des Bremsdruckes p_{B} so gewählt, dass der Fahrer in dem Zugfahrzeug 2 eine haptische Rückmeldung R_{H} darüber empfindet, ob der Anhänger 3 abgebremst wird oder nicht. Im Block 208 wird die Dauer tp_{B} des Anliegens des Bremsdruckes tps an den Rädern 15 des Anhängers 3 in Abhängigkeit des Kurvenradius r und eines Gefälles G_{F} der Fahrbahn 4 bestimmt.

Anschließend wird im Block 209 geprüft, ob der Gang G_{G} durch den Fahrer heruntergeschaltet wurde oder ob das Retarderbremsmoment M_{R} erhöht wurde. Tritt mindestens eine dieser Bedingungen ein, wird im Block 210 das Verfahren beendet, indem der an den Rädern 15 des Anhängers anliegende Bremsdruck auf null herunter gefahren wird.

### Bezugszeichenliste (Bestandteil der Beschreibung)

- 1: Fahrzeugkombination
- 2: Zugfahrzeug
- 3: Anhänger
- 4: Fahrbahn
- 5: Bremssystem des Zugfahrzeuges
- 6: Bremssteuereinrichtung
- 7: Radbremse
- 8: Motorgetriebeeinheit
- 9: Retarder
- 10: Anhängerbremssystem
- 11: Anhängerbremsen
- 12: Anhängerbremssteuereinrichtung
- 13: Datenbus
- 14: Rader des Zugfahrzeuges
- 15: Räder des Anhängers
- 16: Vorderräder des Zugfahrzeuges
- 17: Drehzahlsensor
- 18: Gangschalteinheit
- 19: Ladung
- 20: Gierratensensor
- S: Schalter
- G_{G}: Gang
- p_{B}: Bremsdruck
- S_{M}: Summenschwellwert
- S_{MB}: (erster) Verzögerungsschwellwert
- S_{MR}: (zweiter) Verzögerungsschwellwert
- S_{KW}: Knickwinkelschwellwert
- BM_{M}: Motorbremsmoment
- M_{R}: Retarderbremsmoment
- Gp: Gaspedal
- tp_{B}: Dauer des Bremsdruckes
- G_{F}: Gefälle der Fahrbahn
- GWT: Gewichtsversteilung
- ST: Stärke
- R_{H}: haptische Rückmeldung
- v: Geschwindigkeit der Vorderräder des Zugfahrzeuges
- β: Gierwinkel

## Patentansprüche

1. Verfahren zur Stabilisierung einer Fahrzeugkombination (1), umfassend ein Zugfahrzeug (2) und einen Anhänger (3), wobei bei einer nicht-radgebremsten Verzögerung des Zugfahrzeuges (2) der Anhänger (3) durch Aufbringen eines Bremsdruckes (p_{B}) auf die Räder des Anhängers (3) abgebremst wird, und bei einer Überschreitung eines Verzögerungsschwellwertes (S_{BM}, S_{MR}, S_{M}) durch eine am Zugfahrzeug (2) ermittelte Verzögerung (BM_{M}, M_{R}) durch einen Motor (8) und/oder durch einen Retarder (9) und/oder bei Überschreitung eines Knickwinkelschwellwertes (S_{KW}) durch einen ermittelten Knickwinkel (KW) zwischen dem Zugfahrzeug (2) und dem Anhänger (3) der Bremsdruck (p_{B}) auf die Räder (15) des ungebremsten Anhängers (3) aufgebracht wird, **dadurch gekennzeichnet, dass** eine Dauer (tps) des Anlegens des Bremsdruckes (ps) an die Räder (15) des Anhängers (3) in Abhängigkeit von einem Gefälle (G_{F}) einer Fahrbahn (4), auf welcher sich die Fahrzeugkombination (1) bewegt, und/oder dem ermittelten Kurvenradius (r) bestimmt wird.

2. Verfahren nach Anspruch 1, **dadurch gekennzeichnet, dass** der Bremsdruck (p_{B}) kontinuierlich auf die Räder (15) des Anhängers (3) aufgebracht wird.

3. Verfahren nach Anspruch 1 oder 2, **dadurch gekennzeichnet, dass** die Verzögerung (BM_{M}) durch den Motor (8) und die Verzögerung (M_{R}) durch den Retarder (9) des Zugfahrzeuges (2) aus einem Motorbremsmoment (BM_{M}) oder einem Retarderbremsmoment (M_{R}) bestimmt wird.

4. Verfahren nach Anspruch 1, 2 oder 3, **dadurch gekennzeichnet, dass** der Anhänger (3) abgebremst wird, wenn sich die Fahrzeugkombination (1) auf einer ebenen oder abschüssigen Fahrbahn (4) bewegt.

5. Verfahren nach mindestens einem der vorhergehenden Ansprüche, **dadurch gekennzeichnet, dass** der Knickwinkel (KW) aus einem Kurvenradius (r) bestimmt wird, wobei der Kurvenradius (r) aus einem Gierwinkel (β) abgeleitet wird, welcher mittels eines Gierratensensors (20) detektiert wird oder anhand einer Geschwindigkeit (v) der Vorderräder (16) des Zugfahrzeuges (2) ermittelt wird.

6. Verfahren nach mindestens einem der vorhergehenden Ansprüche, **dadurch gekennzeichnet, dass** ein Aufbringen des Bremsdruckes (p_{B}) auf die Räder (15) des Anhängers (3) nach einer manuellen Funktionseinstellung im Zugfahrzeug (2) erfolgt.

7. Verfahren nach mindestens einem der vorhergehenden Ansprüche 1 bis 5, **dadurch gekennzeichnet, dass** ein Aufbringen des Bremsdrucks (ps) auf die Räder (15) des Anhängers (3) nach Herunterschalten eines Ganges (G_{G}) oder nach Erhöhung eines Retarderbremsmomentes (M_{R}) erfolgt.

8. Verfahren nach mindestens einem der vorhergehenden Ansprüche, **dadurch gekennzeichnet, dass** eine Stärke (ST) des Bremsdrucks (p_{B}) in Abhängigkeit eines aktuellen Retarderbremsmomentes (M_{R}) und/oder eines aktuellen Motorbremsmomentes (BM_{M}) bestimmt wird.

9. Verfahren nach mindestens einem der vorhergehenden Ansprüche, **dadurch gekennzeichnet, dass** die Stärke (ST) des Bremsdrucks (p_{B}) in Abhängigkeit des Gefälles G_{F} der Fahrbahn (4) und/oder einer Gewichtsverteilung ( GWT) einer Ladung (19) in der Fahrzeugkombination (1) bestimmt wird.

10. Verfahren nach mindestens einem der vorhergehenden Ansprüche, **dadurch gekennzeichnet, dass** die Stärke (ST) des Bremsdrucks (p_{B}) so gewählt wird, dass eine haptische Rückmeldung (R_{H}) über ein Abbremsen des Anhängers (3) im Zugfahrzeug (2) wahrgenommen wird.

11. Verfahren nach mindestens einem der vorhergehenden Ansprüche, **dadurch gekennzeichnet, dass** das Abbremsen des Anhängers (3) durch eine Betätigung eines Gaspedals (Gp) beendet wird.

## Claims

1. Method for stabilizing a vehicle combination (1), comprising a towing vehicle (2) and a trailer (3), wherein, when there is a non-wheel-brake-induced deceleration of the towing vehicle (2), the trailer (3) is braked by applying a braking pressure (p_{B}) to the wheels of the trailer (3) and the braking pressure (pa) is applied to the wheels (15) of the unbraked trailer (3) when a deceleration threshold value (S_{BM}, S_{MR}, S_{M}) is exceeded by a deceleration (BM_{M}, M_{R}) determined at the towing vehicle (2) and brought about by a motor (8) and/or by a retarder (9) and/or when a bending angle threshold value (S_{KW}) is exceeded by a determined bending angle (KW) between the towing vehicle (2) and the trailer (3), **characterized in that** a time period (tp_{B}) for which the braking pressure (p_{B}) is applied to the wheels (15) of the trailer (3) is determined in dependence on a gradient (G_{F}) of a roadway (4) on which the vehicle combination (1) is moving and/or the determined radius of bend (r).

2. Method according to Claim 1, **characterized in that** the braking pressure (pB) is applied continuously to the wheels (15) of the trailer (3).

3. Method according to Claim 1 or 2, **characterized in that** the deceleration (BM_{M}) by the motor (8) and the deceleration (M_{R}) by the retarder (9) of the towing vehicle (2) is determined from a motor braking torque (BM_{M}) or a retarder braking torque (M_{R}) .

4. Method according to Claim 1, 2 or 3, **characterized in that** the trailer (3) is braked when the vehicle combination (1) is moving on a level or descending roadway (4).

5. Method according to at least one of the preceding claims, **characterized in that** the bending angle (KW) is determined from a radius of bend (r), wherein the radius of bend (r) is derived from a yaw angle (β), which is detected by means of a yaw rate sensor (20) or is determined on the basis of a speed (v) of the front wheels (16) of the towing vehicle (2).

6. Method according to at least one of the preceding claims, **characterized in that** the braking pressure (p_{B}) is applied to the wheels (15) of the trailer (3) after a manual functional setting has been made in the towing vehicle (2).

7. Method according to at least one of the preceding Claims 1 to 5, **characterized in that** the braking pressure (p_{B}) is applied to the wheels (15) of the trailer (3) after changing down a gear (G_{G}) or after increasing a retarder braking torque (M_{R}).

8. Method according to at least one of the preceding claims, **characterized in that** an intensity (ST) of the braking pressure (p_{B}) is determined in dependence on a current retarder braking torque (M_{R}) and/or a current motor braking torque (BM_{M}).

9. Method according to at least one of the preceding claims, **characterized in that** the intensity (ST) of the braking pressure (p_{B}) is determined in dependence on the gradient (G_{F}) of the roadway (4) and/or a weight distribution (GWT) of a load (19) in the vehicle combination (1).

10. Method according to at least one of the preceding claims, **characterized in that** the intensity (ST) of the braking pressure (p_{B}) is chosen such that haptic feedback (R_{H}) with respect to braking of the trailer (3) is perceived in the towing vehicle (2).

11. Method according to at least one of the preceding claims, **characterized in that** the braking of the trailer (3) is ended by an actuation of an accelerator pedal (G_{P}).

## Revendications

1. Procédé de stabilisation d'une combinaison de véhicules (1), comprenant un véhicule tracteur (2) et une remorque (3), dans lequel, en cas de décélération non freinée par les roues du véhicule tracteur (2), la remorque (3) est freinée par application d'une pression de freinage (p_{B}) sur les roues de la remorque (3), et, en cas de dépassement d'une valeur seuil de décélération (S_{BM}, S_{MR}, S_{M}) par une décélération (BM_{M}, M_{R}) déterminée sur le véhicule tracteur (2) par un moteur (8) et/ou par un ralentisseur (9) et/ou, en cas de dépassement d'une valeur seuil d'angle d'articulation (Snw) par un angle d'articulation (K_{W}) déterminé entre le véhicule tracteur (2) et la remorque (3), la pression de freinage (p_{B}) est appliquée sur les roues (15) de la remorque (3) non freinée, **caractérisé en ce qu'**une durée (tp_{B}) d'application de la pression de freinage (p_{B}) sur les roues (15) de la remorque (3) est déterminée en fonction d'une pente (G_{F}) d'une chaussée (4) sur laquelle se déplace la combinaison de véhicules (1) et/ou du rayon de courbure (r) déterminé.

2. Procédé selon la revendication 1, **caractérisé en ce que** la pression de freinage (p_{B}) est appliquée en continu sur les roues (15) de la remorque (3).

3. Procédé selon la revendication 1 ou 2, **caractérisé en ce que** la décélération (BM_{M}) par le moteur (8) et la décélération (M_{R}) par le ralentisseur (9) du véhicule tracteur (2) sont déterminées à partir d'un couple de freinage de moteur (BM_{M}) ou d'un couple de freinage de ralentisseur (M_{R}).

4. Procédé selon la revendication 1, 2 ou 3, **caractérisé en ce que** la remorque (3) est freinée lorsque la combinaison de véhicules (1) se déplace sur une chaussée plane ou en pente (4).

5. Procédé selon au moins l'une quelconque des revendications précédentes, **caractérisé en ce que** l'angle d'articulation (KW) est déterminé à partir d'un rayon de courbure (r), le rayon de courbure (r) étant déduit d'un angle de lacet (β) qui est détecté au moyen d'un capteur de taux de lacet (20) ou déterminé à partir d'une vitesse (v) des roues avant (16) du véhicule tracteur (2).

6. Procédé selon au moins l'une quelconque des revendications précédentes, **caractérisé en ce qu'**une application de la pression de freinage (p_{B}) sur les roues (15) de la remorque (3) est effectuée après un réglage manuel du fonctionnement dans le véhicule tracteur (2).

7. Procédé selon au moins l'une quelconque des revendications 1 à 5 précédentes, **caractérisé en ce qu'**une application de la pression de freinage (p_{B}) sur les roues (15) de la remorque (3) a lieu après un rétrogradage d'une vitesse (G_{G}) ou après une augmentation d'un couple de freinage de ralentisseur (M_{R}).

8. Procédé selon au moins l'une quelconque des revendications précédentes, **caractérisé en ce qu'**une intensité (ST) de la pression de freinage (ps) est déterminée en fonction d'un couple de freinage de ralentisseur (M_{R}) actuel et/ou d'un couple de freinage de moteur (BM_{M}) actuel.

9. Procédé selon au moins l'une quelconque des revendications précédentes, **caractérisé en ce que** l'intensité (ST) de la pression de freinage (p_{B}) est déterminée en fonction de la pente G_{F} de la chaussée (4) et/ou d'une répartition de poids (GWT) d'un chargement (19) dans la combinaison de véhicules (1).

10. Procédé selon au moins l'une quelconque des revendications précédentes, **caractérisé en ce que** l'intensité (ST) de la pression de freinage (ps) est choisie de manière à percevoir un retour haptique (R_{H}) d'un freinage de la remorque (3) dans le véhicule tracteur (2).

11. Procédé selon au moins l'une quelconque des revendications précédentes, **caractérisé en ce que** le freinage de la remorque (3) est terminé par un actionnement d'une pédale d'accélérateur (G_{P}).
